# EUROPÄISCHE PATENTSCHRIFT

(11) **EP 2 745 698 B1**
(45) Veröffentlichungstag und Bekanntmachung des Hinweises auf die Patenterteilung: **07.12.2016**
(21) Anmeldenummer: 12198970.1
(22) Anmeldetag: 21.12.2012
(51) Int. Cl.: A22C 11/02

(54) **Füllrohr-Zentriervorrichtung sowie Verfahren zum Zentrieren eines Füllrohrs**
Filling tube centring device and method for centring a filling tube
Dispositif de centrage d'un tuyau de remplissage et procédé de centrage d'un tuyau de remplissage

(43) Veröffentlichungstag der Anmeldung: 25.06.2014
(73) Patentinhaber: Albert Handtmann Maschinenfabrik GmbH & Co. KG, 88400 Biberach (DE)
(72) Erfinder: Betz, Andreas, 88471 Baustetten (DE); Bächtle, Manfred, 88433 Schemmerhofen (DE); Schliesser, Gerhard, 88489 Wain (DE); Merk, Jochen, 88416 Ochsenhausen (DE); Osswald, Florian, 89079 Ulm (DE)
(74) Vertreter: Grünecker Patent- und Rechtsanwälte PartG mbB

(56) Entgegenhaltungen:
- US-A- 2 169 412
- US-A- 3 195 176
- US-A- 5 803 801
- US-A1- 2008 236 103

## Beschreibung

Die Erfindung betrifft eine Füllrohr-Zentriervorrichtung gemäß dem Oberbegriff des Anspruchs 1 sowie ein Verfahren zum Zentrieren eines Füllrohrs gemäß dem Oberbegriff des Anspruchs 10.

Bei der Wurstherstellung wird das Wurstbrät über ein Füllrohr bzw. eine Tülle in eine Wursthülle bzw. einen Darm ausgestoßen. Dabei befinden sich sogenannte Darmraupen auf dem Füllrohr. Zum Aufziehen der Darmraupen auf das Füllrohr werden ein oder mehrere Füllrohre axial oder radial bzw. kombiniert axial / radial aus einer Arbeitsposition in eine Aufziehposition bewegt. Bei dieser Bewegung kommt es zu Schwingungen bzw. Positionsungenauigkeiten der Tülle bei Erreichen der Aufziehposition in Bezug zur Mitte der Darmraupe, die auf das Füllrohr aufgezogen werden soll. Erschwerend kommt hinzu, dass die Füllrohre leicht verbogen sein können, insbesondere lange Füllrohre mit kleinen Durchmessern.

In der Praxis kommt bisher ein einseitig an die Tülle angelegtes Zentrierprisma zur Anwendung, welches vorrangig für die Beruhigung der Tüllenschwingung bei langen Tüllen eingesetzt wird. Dieses Zentrierprisma ist schwenkbar gelagert. Beim Aufziehvorgang schiebt die Stirnseite der Darmraupe dieses Prisma weg, so dass es wegklappen kann. Wenn das Füllrohr wieder in die Produktionsposition bewegt wird, kann das Zentrierprisma wieder in seine Ausgangsstellung zurückgeführt werden. Eine konzentrische Ausrichtung der Tülle zur aufzuziehenden Darmraupe ist Voraussetzung für einen sicheren Aufziehprozess, da der Unterschied zwischen dem Außendurchmesser des Füllrohrs und dem Innendurchmesser der Darmraupe oft sehr gering ist. Die Tülle muss auf jeden Fall sicher am Zentrierprisma anliegen, damit immer die gleiche Zentrierposition erreicht wird. Nachteilig ist hierbei, dass die Tülle über die Aufziehposition hinaus bewegt werden muss, damit sie sicher im Zentrierprisma anliegt. Das Zentrierprisma sorgt dafür, dass das offene Ende des Füllrohrs zentrisch zur aufzuziehenden Darmraupe positioniert wird. Die einseitige Tüllen-Zentriereinrichtung muss vom Bediener genau auf den Durchmesser des Füllrohrs eingestellt und positioniert werden, damit ein störungsfreier Betrieb gewährleistet werden kann.

Aus der DE 42 23 128 A1 und der US 3 195 176 A ist bereits ein Verfahren und eine Vorrichtung zum Vereinzeln und Aufbringen einer Darmraupe auf ein Füllrohr bekannt.

Hiervon ausgehend liegt der vorliegenden Erfindung die Aufgabe zugrunde, eine Füllrohr-Zentriervorrichtung sowie ein entsprechendes Verfahren bereitzustellen, die eine genaue Positionierung des Füllrohrs auf einfache Art und Weise ermöglichen.

Gemäß der vorliegenden Erfindung sind nun zwei gegenüberliegende, aufeinander zu bewegbare Zentrierteile vorgesehen, zwischen denen das Füllrohr gehalten und somit zentriert werden kann. Bei der Montage der Füllrohr-Zentriervorrichtung sind die Zentrierteile derart justiert, dass die beiden Zentrierteile stets den gleichen Abstand zu ihrem Zentrum aufweisen, was ebenfalls dem Zentrum des Füllrohrs entspricht. Somit fluchtet die Mittelachse der Zentrierteile bzw. die Mittelachse des gehaltenen Füllrohrs und die Mittelachse der aufzuziehenden Darmraupe bzw. der Darmaufziehvorrichtung miteinander. Da sich die Zentrierteile aufeinander zu bewegen und jeweils stets den gleichen Abstand von dem Zentrum aufweisen, muss von dem Bediener die Zentriereinrichtung nicht eingestellt werden bzw. auf Füllrohre mit unterschiedlichem Durchmesser angepasst werden. Außerdem ist es hier nicht nötig, wie beim Stand der Technik, das Füllrohr beim Zentriervorgang über die Aufziehposition hinaus zu bewegen, damit sie sicher an dem Zentrierteil anliegt. Die Zentrierteile, die sich auf das Füllrohr von beiden Seiten zu bewegen, sorgen für sicheren Kontakt zum Füllrohr und somit für eine exakte Ausrichtung.

Die vorliegende Erfindung ermöglicht eine genauere Positionierung, eine größere Prozesssicherheit beim Aufziehen der Darmraupe, eine höhere Aufziehgeschwindigkeit und einen minimalen Spalt zwischen Tülle und aufgezogener Darmraupe.

Gemäß einer bevorzugten Ausführungsform umfasst die Füllrohr-Zentriervorrichtung ein Kopplungselement, insbesondere ein mechanisches Kopplungselement, das die Bewegung der Zentrierteile in Richtung Füllrohr koppelt. Wenn die Bewegung der Zentrierteile auf beiden Seiten in gleicher Weise auf die Mittelachse M erfolgt, kann sichergestellt werden, dass das Füllrohr stets korrekt konzentrisch zur Darmraupe ausgerichtet wird und es zu keinem Versatz zwischen der Mittelachse des Füllrohrs und der Mittelachse der Zentriereinrichtung kommt. Außerdem kann durch Verwendung eines entsprechenden Kopplungselements ein Antrieb für beide Zentrierteile verwendet werden.

Die Zentrierteile weisen an ihrem Vorderende eine Zentrieraussparung auf, in der das Füllrohr zu liegen kommt. Die Zentrieraussparung ist z.B. insbesondere V- oder U-förmig, das bedeutet, dass die Höhe der Zentrieraussparung sich zumindest abschnittsweise in Richtung der Mittelachse der Vorrichtung erhöht, wenn man einen Längsschnitt senkrecht zur Mittelachse betrachtet. Aufgrund dieser Form können Füllrohre unterschiedlicher Größe gehalten und zentriert werden.

Gemäß der Erfindung weisen die Zentrierteile jeweils einen Träger und ein im Träger drehbar gelagertes Zentrierelement auf. Somit ist eine lineare Bewegung der Träger zur Mittelachse M hin möglich, wobei gleichzeitig eine Schwenkbewegung der Zentrierelemente erfolgen kann. Dadurch, dass zusätzlich zu den Trägern die schwenkbaren Zentrierelemente vorgesehen sind, kann der seitliche Platzbedarf reduziert werden, da die Zentrierelemente in einer Grundstellung, in der kein Füllrohr zentriert wird, einfach weggeklappt werden können. Außerdem ist es möglich, dass das drehbar gelagerte Zentrierelement nicht nur durch die Bewegung des Trägers, sondern auch beispielsweise durch die Darmraupe oder Magnetkräfte bewegt wird. Eine kombinierte Bewegung ist möglich.

Gemäß der vorliegenden Erfindung weist die Vorrichtung einen Antrieb auf, der beide Träger in Richtung Füllrohr und auch in die entgegengesetzte Richtung bewegen kann. Ist ein Kopplungselement vorgesehen, reicht ein Antrieb für beide Träger aus. Somit können Kosten gespart werden.

Gemäß einer bevorzugten Ausführungsform weist die Füllrohr-Zentriervorrichtung für jedes Zentrierteil eine Führung auf, die derart ausgebildet ist, dass die Zentrierelemente aus einer offenen Grundposition mit ihren Vorderenden aufeinander zu zum Füllrohr hin verschwenkt werden, wenn sich die Träger auseinander vom Füllrohr weg bewegen. Unter Grundposition versteht man eine Position, in der die Vorderenden der Zentrierelemente mindestens so weit voneinander weggeschwenkt sind, dass ein Füllrohr in die Aufziehposition, in der eine Darmraupe aufgebracht wird, eingebracht werden kann. Sind die Zentrierelemente dann wieder in einer Position, in der die Vorderenden in Bezug zur Mittelachse M gegenüberliegen, d.h. die Zentrieraussparungen einander zugewandt sind, können die Träger dann aufeinander zu gefahren werden, um das Füllrohr zu zentrieren. Somit kann durch eine Linearbewegung der Träger sowohl eine Linearbewegung der Zentrierelemente auf die Mittelachse M bzw. das Füllrohr zu realisiert werden als auch gleichzeitig eine Schwenkbewegung.

Es ist besonders vorteilhaft, wenn das jeweilige Zentrierelement und/oder der jeweilige Träger mindestens einen Magneten umfassen.

Vorteilhafterweise ist der mindestens eine Magnet derart angeordnet, dass wenn die Zentrierelemente einen bestimmten Schwenkwinkel mit ihren Vorderenden auseinander vom Füllrohr weggeschwenkt werden, diese durch Magnetkraft weiter bis zu einem Anschlag, vorzugsweise am Träger in die Grundposition weggeschwenkt werden und/oder die Zentrierelemente durch Magnetkraft in der Position am Anschlag am Träger gehalten werden.

Somit können die Zentrierelemente unabhängig von der Bewegung der Träger ganz nach außen weggeklappt werden und in dieser Position gehalten werden.

Der mindestens eine Magnet kann auch derart vorgesehen sein, dass wenn die Zentrierelemente mit ihren Vorderenden aufeinander zu zum Füllrohr hin geschwenkt werden, die Zentrierelemente bei einem bestimmten Schwenkwinkel durch Magnetkraft weiter bis zu einem Anschlag, vorzugsweise am Träger in eine Position geschwenkt werden, in der die Zentrieraussparungen einander zugewandt sind und/oder die Zentrierelemente in dieser Position auf Anschlag am Träger gehalten werden.

Dadurch, dass die Zentrierelemente verschwenkbar sind, können sie dann auch, wenn die Darmraupe eine bestimmte Strecke auf das Füllrohr geschoben wurde, von der Darmraupe vom Füllrohr weggeschwenkt werden, ohne dass hierfür ein spezieller Antrieb notwendig ist.

Gemäß dem erfindungsgemäßen Verfahren wird das Füllrohr aus einer Arbeitsposition, in der die Wursthülle befüllt wird, dann, wenn eine neue Darmraupe aufgebracht werden soll, in eine Ausziehposition bewegt. Dabei soll mit umfasst sein, dass das Füllrohr vor der Aufziehposition zunächst in eine Zwischen- oder Warteposition gebracht wird. Die zwei gegenüberliegenden Zentrierteile werden aufeinander zu bewegt und halten das Füllrohr dazwischen und können das Füllrohr somit in einer bestimmten Position zentrieren.

Auf das zentrierte Füllrohr wird eine Darmraupe mit Hilfe einer Darmaufziehvorrichtung geschoben, wobei sich die Zentrierteile vom Füllrohr weg bewegen, wenn die Darmraupe eine bestimmte Strecke auf das Füllrohr geschoben wurde. Vorzugsweise schwenkt die sich bewegende Darmraupe das in dem Träger des jeweiligen Zentrierteils gelagerte Zentrierelement dann weg.

Nach dem vollständigen Aufschieben der Darmraupe auf das Füllrohr kann dann das Füllrohr zurück in seine Arbeitsposition oder bei mehreren Tüllen vorab in eine entsprechende Warteposition, zurückbewegt werden.

Vorteilhafterweise können bei der Montage der Füllrohr-Zentriervorrichtung die Zentrierteile, vorzugsweise die gesamte Füllrohr-Zentriervorrichtung derart justiert werden, dass die Mittelachse der Zentriereinrichtung und somit des Füllrohrs mit einer Mittelachse einer Darmaufziehvorrichtung und somit der Darmraupe fluchtet. Somit muss der Bediener nicht jedes Mal selbst eine Justierung vornehmen, insbesondere auch nicht beim Wechsel auf Füllrohre mit unterschiedlichem Durchmesser.

Es gibt auch Maschinen bei denen die Darmraupe nicht auf das Füllrohr aufgeschoben wird" sondern das Füllrohr in die Darmraupe eingeschoben wird. Dann ist die Füllrohr-Zentriervorrichtung zusammen mit dem gehaltenen Füllrohr (5) axial verschiebbar.

Die vorliegende Erfindung wird nachfolgend unter Bezugnahme folgender Figuren näher erläutert.
- Fig. 1: ist ein Querschnitt durch eine Füllrohr-Zentriervorrichtung gemäß einer Ausführungsform der vorliegenden Erfindung in einer Grundposition.
- Fig. 2: zeigt die in Fig. 1 gezeigte Füllrohr-Zentriervorrichtung mit eingebrachtem Füllrohr.
- Fig. 3: zeigt die in Fig. 1 und 2 dargestellte Füllrohr-Zentriervorrichtung, bei der eine geraffte Darmraupe auf das Füllrohr geschoben wird.
- Fig. 4: zeigt die in den Fig. 1 bis 3 gezeigte Füllrohr-Zentriervorrichtung mit zurückgeklappten Zentrierelementen.
- Fig. 5: zeigt grob schematisch eine Vorderansicht der erfindungsgemäßen FüllrohrZentriervorrichtung gemäß einer bevorzugten Ausführungsform.
- Fig. 6: zeigt eine Vorderansicht der erfindungsgemäßen Füllrohr-Zentriervorrichtung gemäß einer weiteren Ausführungsform.
- Fig. 7: zeigt grob schematisch eine Vorrichtung zum Vereinzeln und Aufbringen von Darmraupen auf ein Füllrohr.

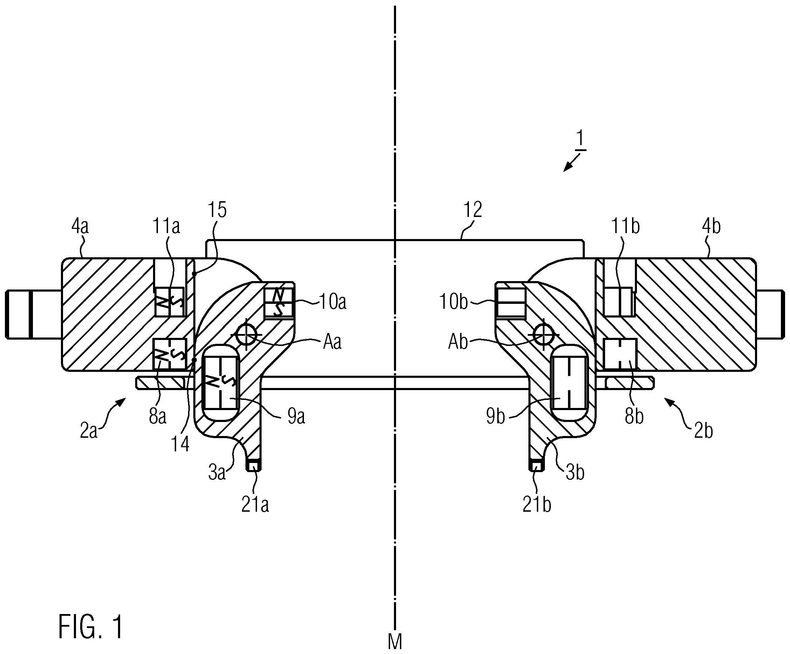

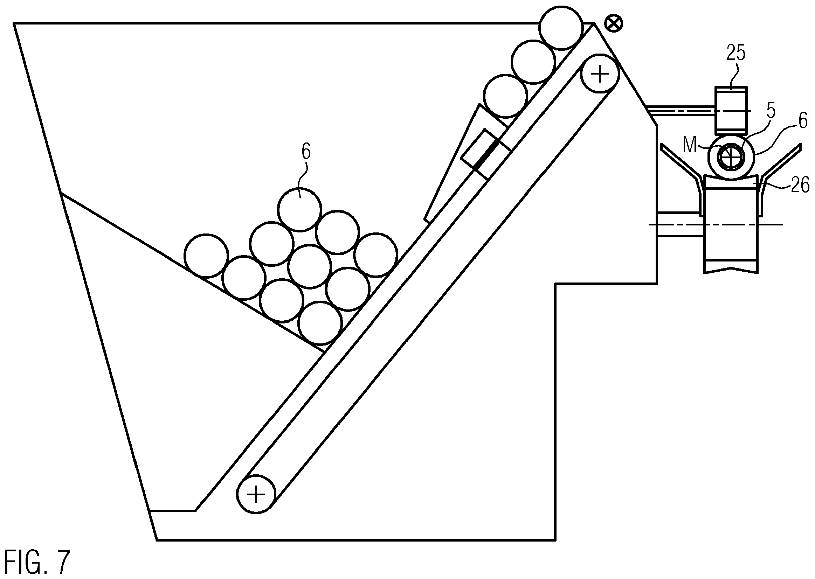

Fig. 1 zeigt eine Ausführungsform einer Füllrohr-Zentriervorrichtung zum konzentrischen Ausrichten des Füllrohrs 5 zu einer Darmraupe 6. Zur Erzeugung von Würsten sind auf einem Füllrohr 5 Darmraupen 6 aufgeschoben, wobei dann durch das Füllrohr eine pastöse Masse, z.B. Wurstbrät, in den Darm ausgestoßen wird, der wiederum dabei vom Füllrohr abgezogen wird. Zum Aufbringen des Darms ist, wie in Fig. 7 gezeigt ist, beispielsweise eine Darmaufziehvorrichtung vorgesehen, bei der Darmraupen 6 mit konstantem Durchmesser in einem Vorratsbehälter vorgesehen sind und von dort auf eine Transporteinrichtung 26 gebracht werden. Die entsprechende Darmraupe 6 wird auf der Transporteinrichtung 26 mit Hilfe einer Einrichtung 25 ausgerichtet und dann durch die Transporteinrichtung 26 auf ein Füllrohr 2 aufgeschoben bzw. aufgezogen.

Eine konzentrische Ausrichtung des Füllrohrs 5 zur aufzuziehenden Darmraupe 6 bzw. zu der Darmaufziehvorrichtung, ist Voraussetzung für einen sicheren Aufziehprozess, da der Unterschied zwischen dem Außendurchmesser des Füllrohrs und dem Innendurchmesser der Darmraupe oft sehr gering ist.

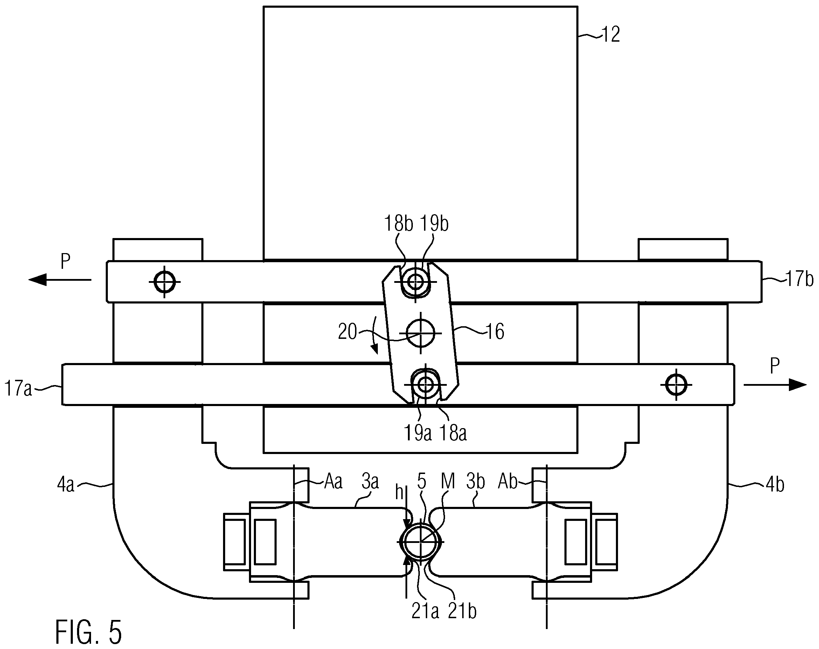

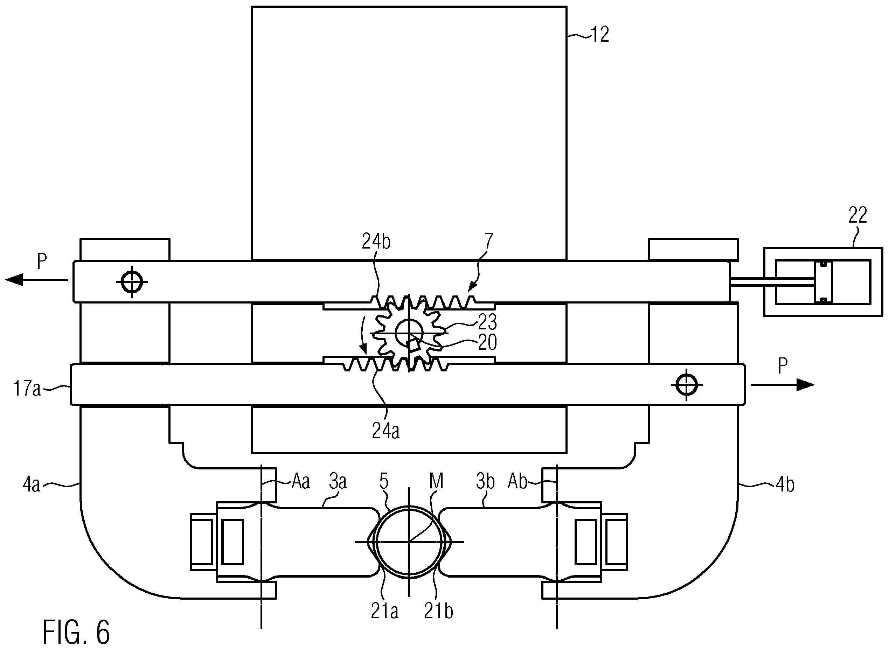

Die in Fig. 1 gezeigte Füllrohr-Zentriervorrichtung 1 weist zwei aufeinander zu bewegbare Zentrierteile 2a,b auf, die jeweils gleichen Abstand zu einer Mittelachse M aufweisen und zwischen denen das Füllrohr 5 gehalten und zentriert werden kann. Die beiden Zentrierteile 2a,b werden werksseitig bei der Montage der Vorrichtung so montiert und justiert, dass die Mittelachse M, die auch der Mittelachse M des zentrierten Füllrohrs 5 entspricht, mit der Mittelachse M der Darmraupe 6 in der Darmaufziehvorrichtung fluchtet. Die Zentrierteile 2a,b weisen jeweils einen Träger 4a,b und ein im Träger drehbar gelagertes Zentrierelement 3a,b auf. Das Zentrierelement 3a,b ist jeweils um die entsprechende Achse Aa bzw. Ab verschwenkbar. Die Zentrierelemente 3a,b weisen ferner Zentrieraussparungen 21a,b an ihren Vorderenden auf. Wie insbesondere aus den Fig. 5 und 6 zu erkennen ist, kann innerhalb der z.B. prismaförmigen Aussparungen 21 a,b das Füllrohr 5 gehalten werden. Die Aussparungen 21 a,b sind jeweils derart gestaltet, dass bei einem Längsschnitt durch das Zentrierelement senkrecht zur Mittelachse M die Höhe h der Aussparung in Richtung Mittelachse M zumindest abschnittsweise zunimmt. Die Zentrieraussparung ist hier im Schnitt insbesondere V-förmig. Durch diese Form können Füllrohre mit unterschiedlichem Durchmesser sicher gehalten werden, ohne dass die Anlage umjustiert oder umgerüstet werden muss. Die Zentrierelemente 3a,b werden dann entsprechend so weit in Richtung Mittelachse M bewegt, bis das entsprechende Füllrohr mit einer definierten Kraft gehalten wird.

In der Fig. 1 befinden sich die Zentrierelemente in einer Grundposition, d.h., dass die Zentrierelemente 3a,b von der Mittelachse M weggeschwenkt sind. In Fig. 1 befindet sich noch kein Füllrohr 5 in der Vorrichtung 1. In diesem Ausführungsbeispiel weist sowohl das Zentrierelement 3a,b als auch der Träger 4a,b jeweils zwei Magneten 8a, 11a, 10a, 9a auf. In der Grundposition, die in Fig. 1 gezeigt ist, wird das Zentrierelement 3a,b durch Magnetkraft auf Anschlag 14 gehalten. Die Magnete sind dabei derart angeordnet, dass der Magnet 8a,b im Träger 4a,b den Magnet 9a,b im Zentrierelement 3a,b anzieht. Es könnte auch nur entweder im Träger 4a,b oder im Zentrierelement 3a,b ein Magnet vorgesehen sein, der dann einen entsprechenden Metallabschnitt anzieht

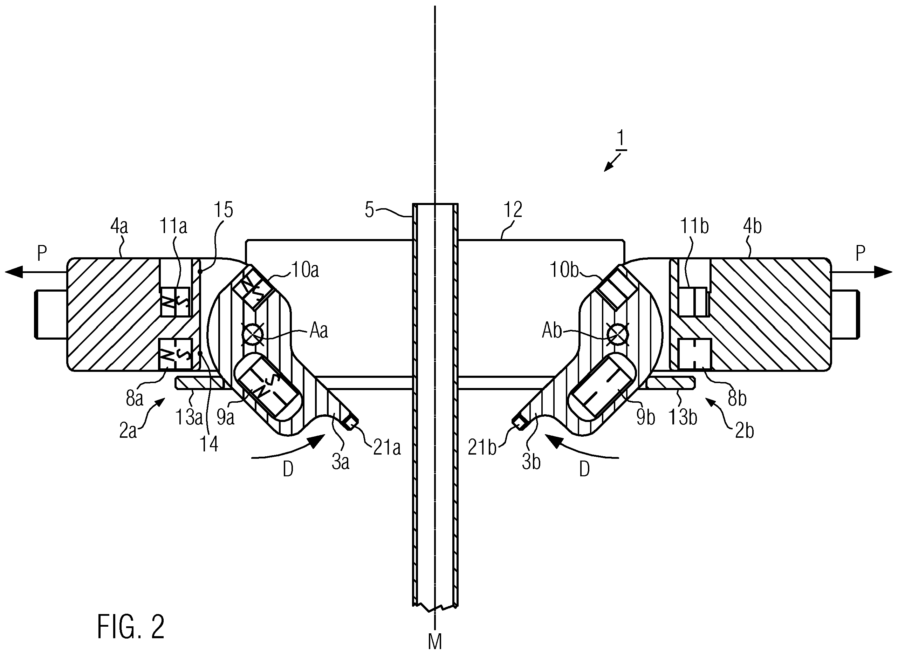

Ein Füllrohr 5, auf das eine Darmraupe aufgezogen werden soll, kann über eine entsprechende Einrichtung von einer Arbeitsposition axial oder radial oder kombiniert axial, radial in die Aufziehposition zwischen den Zentrierteilen, wie in Fig. 2 gezeigt ist, eingebracht werden.

Die Zentrierteile 2a,b sind, wie aus Fig. 2 hervorgeht, von der Mittelachse M weg- und hinbewegbar. Die Bewegung der gegenüberliegenden Zentrierteile 2a,b ist dabei gekoppelt, wie insbesondere aus Fig. 5 hervorgeht.

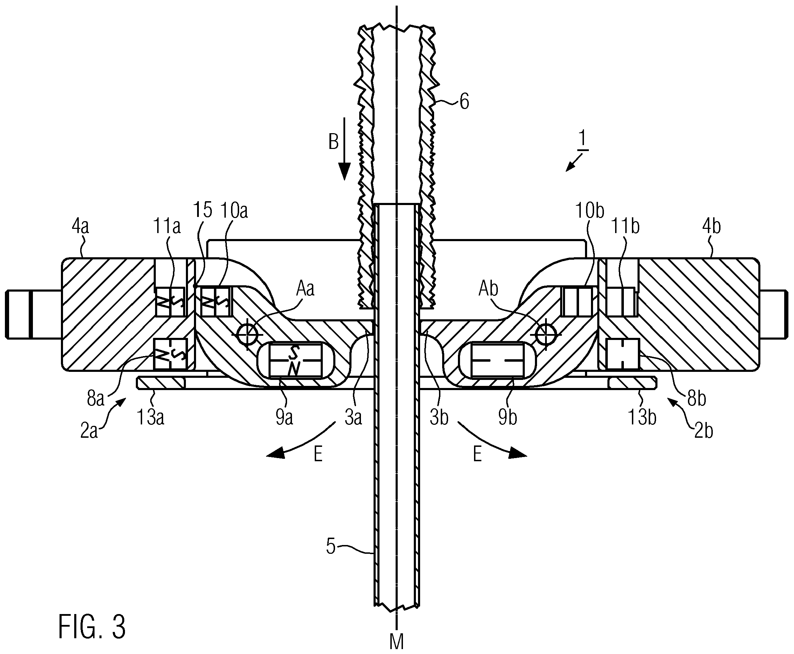

Fig. 5 zeigt eine Vorderansicht einer Vorrichtung mit eingeklappten Zentrierelementen 3a,b, wie beispielsweise in Fig. 3 gezeigt. Zur Kopplung der Bewegung der Zentrierteile 2a,b ist ein Kopplungselement 7 vorgesehen. Das Kopplungselement 7 sorgt dafür, dass wenn sich ein Zentrierteil, z.B. Zentrierteil 2a, entlang des Pfeils nach außen bewegt, sich das andere Zentrierteil 2b um die gleiche Strecke nach außen von der Mittelachse M weg bewegt. Wird das Zentrierteil 2a zur Mittelachse M hin bewegt, wird durch das Kopplungselement 7 das Zentrierteil 2b die gleiche Strecke zur Mittelachse M hin bewegt. Hier umfasst der Antrieb für die Bewegung beispielsweise eine Welle 20, die das Hebelteil 16 nach rechts oder nach links dreht. Das Hebelteil 16 ist über Vorsprünge 19a, 19b, die in entsprechenden Aussparungen 18a,b des Verbindungsstücks 16 zu liegen kommen, mit zwei Führungsteilen 17a,b verbunden. Wird nun das Hebelteil 16 über die Welle 20 gedreht, wie durch den Pfeil dargestellt ist, überträgt das Hebelteil 16 die Bewegung auf das Führungsteil 17b, das hier beweglich im Träger 4b gelagert ist. Dadurch wird der Träger 4a in Pfeilrichtung P bewegt. Gleichzeitig überträgt das Hebelteil 16 die Bewegung auf das Führungsteil 17a, das ebenfalls beweglich im Träger 4a verläuft, derart, dass sich der Träger 4b, der fest mit dem Führungsteil 17a verbunden ist, in Pfeilrichtung bewegt. Das Führungsteil 17b ist fest mit dem Träger 4a verbunden. Anstatt der Welle 20 kann der Antrieb auch beispielsweise über einen Pneumatikzylinder 22, der mit einem der Führungsteile 17a,b verbunden ist, erfolgen, wie in Fig. 6 gezeigt ist. Anstatt des in Fig. 5 gezeigten Kopplungselements in Form des Hebelteils, kann zur Kopplung der Bewegungen auch ein Zahnrad 23 vorgesehen sein, das in den Verzahnungen 24a, 24b in den entsprechenden Führungsteilen 17a, 17b läuft, vorgesehen sein. Alternativ zu dem in Fig. 6 gezeigten Zylinder 22 kann das Zahnrad 23 selbstverständlich auch über eine entsprechende Welle 20 angetrieben werden. Als mögliche Antriebe für das Kopplungselement eignen sich beispielsweise Motoren, Pneumatik- oder Hydraulikzylinder, Hubmagneten etc.

Die Vorrichtung weist auch ein mit 12 angedeutetes Gehäuse auf.

Befindet sich nun das Füllrohr 5, wie in Fig. 2 gezeigt ist, zwischen den Zentrierteilen 2a,b, so werden die Träger 4a,b entlang der Pfeile P nach außen, z.B. über den zuvor beschriebenen Antrieb und die entsprechende Kopplung, bewegt. Die Vorrichtung weist weiter eine Führung, hier in Form eines Anschlags 13a,b auf. Bei der Bewegung der Träger 4a,b nach außen fahren die Zentrierelemente 3a,b gegen den Anschlag 13a,b und werden aufgrund ihrer gekrümmten Form in Pfeilrichtung D um die Achse Aa,Ab zur Mittelachse M zum Füllrohr geschwenkt. Die Zentrierelemente 3a,b werden dabei vollständig bis zum Anschlag 15 am Träger eingeschwenkt, derart, dass sich die Zentrieraussparungen 21 a,b gegenüberliegen. Dabei kann das vollständige Einschwenken der Zentrierelemente 3a,b entweder ausschließlich über die Bewegung der Träger 4a,b in Pfeilrichtung P erfolgen oder aber die Zentrierelemente 3a,b werden ab einem bestimmten Schwenkwinkel durch Magnetkraft weiterbewegt, indem beispielsweise der Magnet 11 a den Magneten 10a anzieht. Der Magnet 11 a hält den Magneten 10a in der entsprechend eingeschwenkten Endposition. Wenn die Zentrierelemente 3a,b vollkommen eingeschwenkt sind, werden die Träger 4a,b entgegen Pfeilrichtung P auf das Füllrohr 5 in die in Fig. 3 gezeigte Zentrierstellung verfahren. Die beiden Zentrierteile 2a,b bzw. Träger 4a,b werden so weit aufeinander zu bewegt, bis sie das Füllrohr 5, wie in Fig. 5 gezeigt ist, umschließen und mit einer definierten Kraft halten und ausrichten. Die erforderliche Zentrierkraft wurde in Versuchen ermittelt und ist so groß, dass die üblicherweise verwendeten Füllrohre zentriert werden können. Dabei werden die Zentrierelemente auch bei Füllrohren mit kleinem Durchmesser ausreichend weit zur Mittelachse hin bewegt, so dass diese sicher gehalten und zentriert werden.

Sind die Zentrierelemente 3a,b in ihrer Zentrierposition, wie in Fig. 3 sowie 5 und 6 gezeigt ist, kann die geraffte Darmraupe 6 über die Darmaufzieheinrichtung auf das Füllrohr 5 in Pfeilrichtung B aufgebracht werden. Da der Durchmesser der gerafften Darmraupe 6 größer ist als der des Füllrohrs 5, kann die Stirnseite der gerafften Darmraupe die der Darmraupe 6 zugewandte Seite der Zentrierelemente 3a,b wegschieben, derart, dass sich die Zentrierelemente 3a,b um die Achse Aa, Ab in Pfeilrichtung B nach außen verschwenken. Die Darmraupe 6 schiebt die Zentrierelemente 3a,b entgegen der Magnetkraft der Magneten 11a, 10a weg. Ab einem bestimmten Schwenkwinkel der Zentrierelemente 3a,b werden die Zentrierelemente 3a,b durch die Magnetkraft der Magneten 8a,b, 9a,b bis zum Anschlag 14 am Träger 4a,b weiter verschwenkt.

Die Zentrierelemente 3a,b weisen jeweils eine abgerundete Form auf, wobei wenn sich das Zentrierelement 3a,b in einer nach außen verschwenkten Grundposition befindet, sich die zwei Magneten 8a, 9a gegenseitig anziehen, während die Magneten 11a, 10a derart weit voneinander entfernt sind, dass sie das Zentrierelemente 3a,b nicht aus dieser Position bewegen können.

Wenn das Zentrierelement 3a,b in der Zentrierstellung eingeschwenkt ist, wie beispielsweise in Fig. 3 dargestellt ist, ziehen die Magneten 11a, 10a sich gegenseitig an, derart, dass das Zentrierelement 3a,b in dieser Position gehalten wird, während die beiden anderen Magneten 8a und 9a derart weit auseinander liegen, dass sie das Zentrierelement 3a,b nicht aus dieser Zentrierstellung herausbewegen.

Das Füllrohr kann dann, wenn die Darmraupe vollständig aufgezogen ist, zusammen mit der Darmraupe weggeschwenkt werden. Die Zentriervorrichtung ist dann bereit für das Zentrieren eines neuen Füllrohrs.

Gemäß dem erfindungsgemäßen Verfahren wird zunächst die Füllrohr-Zentriervorrichtung 1 in die in Fig. 1 gezeigte Grundstellung verfahren. Ein Füllrohr 5 wird dann aus einer Arbeitsposition in eine Aufziehposition zwischen den Zentrierteilen 2a,b bewegt.

Um nun das Füllrohr 5 zentrisch auszurichten, werden nun die beiden Zentrierelemente 3a,b mit ihren Vorderenden nach innen in Richtung Mittelachse M verschwenkt und dann auf das Füllrohr 5 linear in Richtung Mittelachse M verfahren.

Dies erfolgt gemäß diesem bevorzugten Ausführungsbeispiel wie folgt:
Wie insbesondere aus Fig. 2 hervorgeht, werden die Träger 4a,b in Pfeilrichtung P gleichförmig auf beiden Seiten auseinander bewegt. Dadurch stößt der abgerundete Bereich der Zentrierelemente 3a,b an der Führung bzw. dem Anschlag 13a,b an und wird dadurch um die Achse Aa, Ab in Pfeilrichtung D zur Mittelachse M hin verschwenkt. Die Zentrierelemente 3a,b werden entweder vollständig über die Bewegung der Träger 4a,b in eine Position verfahren, bis das jeweilige Zentrierelement 3a,b am Anschlag 15 am Träger in einer Endposition anschlägt. Es ist auch möglich, dass über die Träger 4a,b die Zentrierelemente 3a,b nur bis zu einem bestimmten Schwenkwinkel nach innen verschwenkt werden und dann das jeweilige Zentrierelement 3a,b durch die Magnetkraft der Magneten 11a, 10a weiter bis in die Endposition verschwenkt wird.

Dann werden die in diese Position verschwenkten Zentrierelemente 3a,b entgegen der Pfeilrichtung P senkrecht zur Mittelachse M linear auf das Füllrohr 5 zu bewegt, derart, dass das Füllrohr 5 in der Zentrieraussparung 21a,b zu liegen kommt und von den Zentrierelementen 3a,b gehalten wird. Somit kann sich die Mittelachse M des Füllrohrs 5 entlang der Mittelachse M der Zentriereinrichtung und der Mittelachse M der aufzuziehenden Darmbremse korrekt ausrichten.

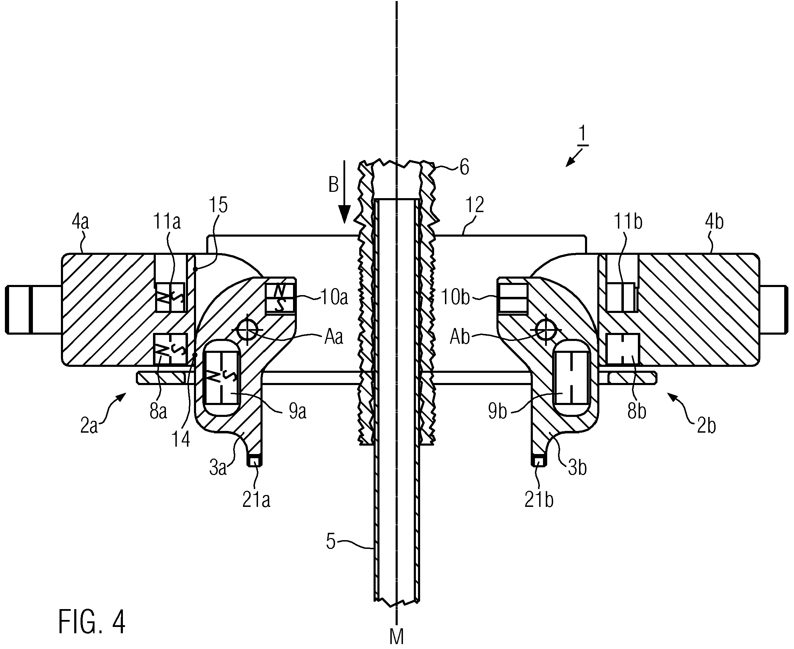

Wie in Fig. 3 dargestellt ist, in der sich die Füllrohr-Zentriervorrichtung in der Zentrierstellung befindet, kann dann die Darmraupe über die in Fig. 7 gezeigte Darmaufziehvorrichtung entlang der Pfeilrichtung B auf das Füllrohr 5 aufgeschoben werden, bis die Stirnseite der steifen Darmraupe auf die Zentrierelemente 3a,b stößt. Die Darmraupe 6 schiebt somit die Zentrierelemente 3a,b weg, derart, dass die Zentrierelemente 3a,b um die Achsen Aa, Ab entlang dem Pfeil E nach außen weg verschwenkt werden. Die Darmraupe 6 kann aufgrund der Geometrie der Vorrichtung die Zentrierelemente 3a,b nur bis zu einem gewissen Schwenkwinkel auslenken. Dann wird jedoch das jeweilige Zentrierelement 3a,b durch die Magnetkraft der Magneten 8a, 9a bis in die Grundposition weiter verschwenkt, wie in Fig. 4 gezeigt ist, wobei das Zentrierelement 3a,b dann am Anschlag 14 am Träger 4a,b anschlägt.

Es gibt auch Maschinen bei denen die Darmraupe nicht auf das Füllrohr aufgeschoben wird, sondern das Füllrohr in die Darmraupe eingeschoben wird. Bei Maschinen mit stationärer Darmraupe und beweglichem Füllrohr kann dann die Zentriereinrichtung auch mit dem Füllrohr über eine entsprechende Bewegungseinrichtung mitbewegt werden.

Die Darmraupe wird dann vollständig auf das Füllrohr aufgezogen. Das Füllrohr 5 kann dann zusammen mit der Darmraupe weggeschwenkt werden, insbesondere in eine Arbeitsposition oder aber in eine Position vor der Arbeitsposition.

Die Zentriervorrichtung 1 ist dann wieder in ihrer Grundposition und kann das nächste Füllrohr 5 zentrieren.

Es ist auch möglich, dass die Anschläge 14, 15 nicht am Träger angeordnet sind sondern beispielsweise am Gehäuse in einer entsprechenden Position befestigt sind, dies ist jedoch nur bei einem bestimmten Füllrohrdurchmesser bzw. geringen Durchmesserunterschieden möglich. Bei größeren Durchmesserdifferenzen müssen die Anschläge beweglich sein.

Da bei der Montage der Füllrohr-Zentriervorrichtung die Zentrierteile 2a,b bereits so justiert wurden, dass die Mittelachse M der Zentriereinrichtung 1 und somit die des zentrierten Füllrohrs 5 mit einer Mittelachse M einer Darmaufziehvorrichtung und somit der Darmraupe fluchtet, muss der Bediener die Zentriereinrichtung nicht vor jedem Vorgang neu einstellen und insbesondere nicht an unterschiedliche Füllrohrdurchmesser anpassen. Auch verbogene Füllrohre stellen kein Problem mehr dar. Die Unterschiede der Darmraupen-Innendurchmesser liegen innerhalb enger Toleranzen. Die ausgewählte Füllrohrgröße orientiert sich an der kleinsten Darmraupe einer Charge. Für größere Würste mit größerem Durchmesser wird dann auch ein Füllrohr mit größerem Durchmesser ausgewählt. Werden Darmraupen unterschiedlicher Größe verwendet, so werden diese von der in Fig. 7 gezeigten Darmaufzieheinrichtung ebenfalls zentriert, derart dass die Mittelachse der Darmraupen konstant bleibt und mit der Soll- Mittelachse M der Zentriervorrichtung fluchten kann. Dazu kann beispielsweise die Transporteinrichtung 26 in ihrer Höhe verstellt werden.

## Patentansprüche

1. Füllrohr-Zentriervorrichtung (1) zum konzentrischen Ausrichten des Füllrohrs (5) zu einer Darmraupe (6), wobei
zwei gegenüberliegende, aufeinander zu bewegbare Zentrierteile (2a,b), zwischen denen das Füllrohr (5) gehalten und zentriert werden kann,
die Zentrierteile (2a,b) jeweils einen Träger (4a,b) und ein im Träger um eine entsprechende Achse (Aa, Ab) drehbar gelagertes Zentrierelement (3a,b) umfassen,
**dadurch gekennzeichnet, dass** die Achsen (Aa, Ab) jeweils in einer Richtung senkrecht zur Mittelachse (M) des Füllrohrs (5) verlaufen.

2. Füllrohr-Zentriervorrichtung (1) nach Anspruch 1, **dadurch gekennzeichnet, dass** die Füllrohr-Zentriereinrichtung (1) ein Kopplungselement (7), insbesondere mechanisches Kopplungselement (7) aufweist, das die Bewegung der Zentrierteile (2a,b) in Richtung Füllrohr (5) koppelt.

3. Füllrohr-Zentriervorrichtung (1) nach Anspruch 1 oder 2, **dadurch gekennzeichnet, dass** die Zentrierteile (2a,b) jeweils eine Zentrieraussparung an ihrem Vorderende aufweisen, wobei die Höhe (h) der Zentrieraussparung sich zumindest abschnittsweise in Richtung einer Mittelachse der Vorrichtung (1) erhöht, wenn man einen Längsschnitt senkrecht zur Mittelachse betrachtet.

4. Füllrohr-Zentriervorrichtung (1) nach Anspruch 1, **dadurch gekennzeichnet, dass** die Vorrichtung einen Antrieb (22) aufweist, der beide Träger (4a,b) in Richtung Füllrohr (5) bewegen kann.

5. Füllrohr-Zentriervorrichtung (1) nach mindestens Anspruch 1, **dadurch gekennzeichnet, dass** die Vorrichtung für jedes Zentrierteil (2a,b) eine Führung (13a,b) aufweist, die derart ausgebildet sind, dass die Zentrierelemente (3a,b) aus einer offenen Grundposition (G) mit ihrem Vorderende aufeinander zu zum Füllrohr hin verschwenkt werden, wenn sich die Träger (4a,b) auseinander vom Füllrohr weg bewegen.

6. Füllrohr-Zentriervorrichtung (1) nach mindestens Anspruch 1, **dadurch gekennzeichnet, dass** das jeweilige Zentrierelement (3a,b) und/oder der jeweilige Träger (4a,b) mindestens einen Magneten (8a,b, 9a,b, 10a,b, 11a,b) umfassen.

7. Füllrohr-Zentriervorrichtung (1) nach Anspruch 6, **dadurch gekennzeichnet, dass** der mindestens eine Magnet derart angeordnet ist, dass wenn die Zentrierelemente (3a,b) einen bestimmten Schwenkwinkel mit ihren Vorderenden auseinander vom Füllrohr (5) weg geschwenkt werden, diese durch Magnetkraft weiter bis zu einem Anschlag (14) vorzugsweise am Träger (4a) in die Grundposition weggeschwenkt werden und/oder die Zentrierelemente (3a,b) durch Magnetkraft in der Grundposition am Anschlag (14) am Träger gehalten werden.

8. Füllrohr-Zentriervorrichtung (1) nach Anspruch 6, **dadurch gekennzeichnet, dass** der mindestens eine Magnet derart angeordnet ist, dass wenn die Zentrierelemente (3a,b) mit ihren Vorderenden aufeinander zu zum Füllrohr (5) hin geschwenkt werden, die Zentrierelemente bei einem bestimmten Schwenkwinkel durch Magnetkraft weiter bis einem weiteren Anschlag (15) vorzugsweise am Träger in eine Position geschwenkt werden, in der die Zentrieraussparungen einander zugewandt sind und/oder die Zentrierelemente (3a,b) in dieser Position (7) auf Anschlag (15) am Träger (4a,b) gehalten werden.

9. Füllrohr-Zentriervorrichtung (1) nach mindestens einem der vorherigen Ansprüche, **dadurch gekennzeichnet, dass** die Zentrierelemente (3a,b) durch die Stirnseite der Darmraupe (6), die auf das Füllrohr (5) aufgeschoben wird, auseinander vom Füllrohr weg verschwenkbar sind.

10. Verfahren zum Zentrieren eines Füllrohrs (5) mit einer Vorrichtung nach mindestens einem der Ansprüche 1 bis 9, wobei
ein Füllrohr (5) aus einer Arbeitsposition in eine Aufziehposition bewegt wird,
zwei gegenüberliegende Zentrierteile (2a,b) aufeinander zu bewegt werden, das Füllrohr (5) dazwischen halten und somit in einer vorbestimmten Position zentrieren,
die Zentrierteile (2a,b) jeweils einen Träger (4a,b) und ein im Träger um eine entsprechende Achse (Aa,Ab) drehbar gelagertes Zentrierelement umfassen,
und wobei die Zentrierelemente (3a,b) um die jeweilige Achse (Aa,Ab) verschwenkt werden, deren Richtung senkrecht zur Mittelachse (M) des Füllrohrs (5) verläuft.

11. Verfahren nach Anspruch 10, **dadurch gekennzeichnet, dass** auf das zentrierte Füllrohr (5) eine Darmraupe aufgeschoben wird, wobei sich die Zentrierteile (2a,b) vom Füllrohr weg bewegen, wenn die Darmraupe eine bestimmte Strecke auf das Füllrohr geschoben wurde, wobei vorzugsweise die Stirnseite der Darmraupe ein drehbar in einem Träger (4a,b) des jeweiligen Zentrierteils (2a,b) gelagertes Zentrierelement (3a,b) wegschwenkt.

12. Verfahren nach Anspruch 10 oder 11, **dadurch gekennzeichnet, dass** nach dem vollständigen Aufziehen bzw. Aufschieben der Darmraupe (6) auf das Füllrohr (5), das Füllrohr (5) in seine Arbeitsposition zurückbewegt wird.

13. Verfahren nach mindestens einem der vorhergehenden Ansprüche 10 bis 12, **dadurch gekennzeichnet, dass** bei Montage der Füllrohrzentriervorrichtung die Zentrierteile (2a,b), vorzugsweise die gesamte Füllrohrzentriervorrichtung derart justiert werden, dass die Mittelachse (M) der Zentriervorrichtung und somit des Füllrohrs (5) mit einer Mittelachse einer Darmaufziehvorrichtung und somit der Darmraupe fluchtet.

14. Füllrohr-Zentriervorrichtung (1) nach mindestens einem der vorherigen Ansprüche 1 bis 9,
**dadurch gekennzeichnet, dass** die Füllrohr-Zentriervorrichtung zusammen mit dem gehaltenen Füllrohr (5) axial verschiebbar ist.

## Claims

1. Stuffing tube centering device (1) for concentric alignment of the stuffing tube (5) to a casing stick (6) wherein
two oppositely disposed centering members (2a,b) movable towards each other between which said stuffing tube (5) is held and centered,
said centering members (2a,b) each comprise a support (4a,b) and a centering element (3a,b) rotatably mounted around a respective axis (Aa,Ab) in said support,
**characterized in that**
the axis (Aa,Ab) extend in a direction perpendicular to the center axis (M) of the stuffing tube (5) respectively.

2. Stuffing tube centering device (1) according to claim 1, **characterized in that** said stuffing tube centering device (1) comprises a coupling element (7), in particular a mechanical coupling element (7), that couples the motion of said centering members (2a,b) in the direction of said stuffing tube (5).

3. Stuffing tube centering device (1) according to claim 1 or 2, **characterized in that** said centering members (2a,b) each comprise a centering recess at their front end, where the height (h) of said centering recess is at least sectionally increased in the direction of a center axis of said device (1), when viewing a longitudinal sectional perpendicular to said center axis.

4. Stuffing tube centering device (1) according to claim 1, **characterized in that** said device comprises a drive (22) which can move both supports (4a,b) in the direction of said stuffing tube (5).

5. Stuffing tube centering device (1) according to at least claim 1, **characterized in that** said device comprises a guide (13a,b) for each centering member (2a,b) that is designed such, that said centering elements (3a,b) are each pivoted from an open initial position (G) with their front ends towards each other towards said stuffing tube when said supports (4a,b) move apart and away from said stuffing tube.

6. Stuffing tube centering device (1) according to at least claim 1, **characterized in that** said respective centering element (3a,b) and/or said respective support (4a,b) comprises at least one magnet (8a,b, 9a,b, 10a,b, 11a,b).

7. Stuffing tube centering device (1) according to claim 6, **characterized in that** said at least one magnet is arranged such that, when said centering elements (3a,b) are with their front ends pivoted apart by a certain pivot angle away from said stuffing tube (5), they are by magnetic force further pivoted up to a stop (14), preferably at said support (4a), to said initial position and/or said centering elements (3a,b) are held by magnetic force in said initial position at said stop (14) on said support.

8. Stuffing tube centering device (1) according to claim 6, **characterized in that** said at least one magnet is arranged such, that, when said centering elements (3a,b) are with their front ends pivoted towards each other towards said stuffing tube (5), said centering elements are at a certain pivot angle by magnetic force further pivoted up to a stop (15), preferably at said support, to a position in which said centering recesses face each other and/or said centering elements (3a,b) are held in this position (7) at a stop (15) at said support (4a,b).

9. Stuffing tube centering device (1) according to at least one of the preceding claims, **characterized in that** said centering elements (3a,b) are by the face side of said casing stick (6), which is pushed onto said stuffing tube (5), pivotable apart, away from said stuffing tube.

10. Method for centering a stuffing tube (5) with a device according to at least one of the claims 1 to 9, wherein
a stuffing tube (5) is moved from a working position to a draw-on position,
two oppositely disposed centering members (2a,b) are moved towards each other, hold said stuffing tube (5) therebetween and thereby center it at a predetermined position,
said centering members (2a,b) each comprise a support (4a,b) and a centering element (3a,b) rotatably mounted around a respective axis (Aa,Ab) in said support, and wherein
the centering elements (3a,b) are pivoted around the respective axis (Aa,Ab) the direction thereof extending perpendicular to the center axis (M) of the stuffing tube (5).

11. Method according to claim 10, **characterized in that** a casing stick is pushed onto said centered stuffing tube (5), where said centering members (2a,b) move away from said stuffing tube when said casing stick has been pushed a certain distance onto said stuffing tube, where preferably said face side of said casing stick pivots away a centering element (3a,b) rotatably mounted in a support (4a,b) of said respective centering member (2a,b).

12. Method according to claim 10 or 12, **characterized in that**, after said casing stick (6) has been fully drawn or pushed onto said stuffing tube (5), said stuffing tube (5) is moved back to its working position.

13. Method according to at least one of the preceding claims 10 to 12, **characterized in that**, during assembly of said stuffing tube centering device, said centering members (2a,b), preferably said entire stuffing tube centering device, are adjusted such, that said center axis (M) of said centering device, and thereby said stuffing tube (5), is in alignment with a center axis of a casing draw-on device and thereby with said casing stick.

14. Stuffing tube centering device (1) according to at least one of the preceding claims 1 to 9,
**characterized in that** said stuffing tube centering device is axially displaceable together with said held stuffing tube (5).

## Revendications

1. Dispositif de centrage (1) d'un tuyau de remplissage pour orienter le tuyaux de remplissage (5) de manière concentrique par rapport à un boyau en forme de chenille (6), où
deux parties de centrage (2a, b) se faisant face et aptes à être déplacées l'une vers l'autre entre lesquelles le tuyau de remplissage (5) peut être maintenu et centré comprennent respectivement un support (4a, b) et un élément de centrage (3a, b) monté sur le support de manière à pouvoir pivoter autour d'un axe (Aa, Ab) correspondant,
**caractérisé en ce que** les axes (Aa, Ab) s'étendent respectivement dans une direction perpendiculaire à l'axe central (M) du tuyau de remplissage (5).

2. Dispositif de centrage (1) de tuyau de remplissage selon la revendication 1, **caractérisé en ce que** le dispositif de centrage (1) de tuyau de remplissage comporte un élément de couplage (7), en particulier un élément de couplage (7) mécanique qui accouple les mouvements des parties de centrage (2a, b) dans la direction du tuyau de remplissage (5).

3. Dispositif de centrage (1) de tuyau de remplissage selon la revendication 1 ou 2, **caractérisé en ce que** les parties de centrage (2a, b) comportent respectivement un évidement de centrage à leur extrémité avant, où la hauteur (h) de l'évidement de centrage augmente au moins par passages dans la direction d'un axe central du dispositif (1), dans une vue à partir d'une section longitudinale perpendiculaire à l'axe central.

4. Dispositif de centrage (1) de tuyau de remplissage selon la revendication 1, **caractérisé en ce que** le dispositif comporte un entraînement (22) qui peut déplacer les deux supports (4a, b) dans la direction du tuyau de remplissage (5).

5. Dispositif de centrage (1) de tuyau de remplissage selon au moins la revendication 1, **caractérisé en ce que** pour chaque partie de centrage (2a, b), le dispositif comporte un guidage (13a, b) conçu de telle manière que les éléments de centrage (3a, b) sont pivotés à partir d'une position initiale (G) ouverte en direction du tuyau de remplissage de telle manière que leurs extrémités avant sont orientées l'une vers l'autre, lorsque les supports (4a, b) s'écartent du tuyau de remplissage.

6. Dispositif de centrage (1) de tuyau de remplissage selon au moins la revendication 1, **caractérisé en ce que** l'élément de centrage (3a, b) respectif et/ou le support (4a, b) respectif comportent au moins un aimant (8a, b, 9a, b, 10a, b, 11a, b).

7. Dispositif de centrage (1) de tuyau de remplissage selon la revendication 6, **caractérisé en ce que** l'au moins un aimant est disposé telle manière que lorsque les éléments de centrage (3a, b) sont pivotés d'un angle déterminé de manière à écarter leurs extrémités avant du tuyau de remplissage (5), ils soient pivotés par la force magnétique vers leur position initiale jusqu'à une butée (14), de préférence disposée au niveau du support (4a), et/ou que les éléments de centrage (3a, b) soient maintenus par la force magnétique dans la position initiale au niveau de la butée (14) au niveau du support.

8. Dispositif de centrage (1) de tuyau de remplissage selon la revendication 6, **caractérisé en ce que** l'au moins un aimant est disposé de telle manière que lorsque les éléments de centrage (3a, b) sont pivotés en direction du tuyau de remplissage (5) de telle manière que leurs extrémités avant sont orientées l'une vers l'autre, les éléments de centrage sont pivotés, à partir d'un certain angle de pivotement, par la force magnétique jusqu'à une autre butée (15), de préférence disposée au niveau d'un support, dans une position dans laquelle les évidements de centrage sont orientés l'un vers l'autre et/ou les éléments de centrage (3a, b) sont maintenus dans cette position (7) contre la butée (15) au niveau du support (4a, b).

9. Dispositif de centrage (1) de tuyau de remplissage selon au moins une des revendications précédentes, **caractérisé en ce que** les éléments de centrage (3a, b) sont aptes à être pivotés de manière à s'écarter l'un de l'autre et à s'éloigner du tuyau de remplissage, par la face avant du boyau en forme de chenille (6) enfilé sur le tuyau de remplissage (5).

10. Procédé de centrage d'un tuyau de remplissage (5) avec un dispositif selon au moins une des revendications 1 à 9, où
un tuyau de remplissage (5) est déplacé à partir d'une position de travail jusqu'à une position d'enfilage,
deux parties de centrage (2a, b) se faisant face sont déplacées l'une vers l'autre, maintiennent le tuyau de remplissage (5) entre elles et le centrent ainsi dans une position prédéterminée,
les parties de centrage (2a, b) comprennent respectivement un support (4a, b) et un élément de centrage monté sur le support de manière à pouvoir pivoter autour d'un axe (Aa, Ab) correspondant,
et où les éléments de centrage (3a, b) sont pivotés autour de l'axe respectif (Aa, Ab), dont la direction s'étend perpendiculairement à l'axe central (M) du tuyau de remplissage (5).

11. Procédé selon la revendication 10, **caractérisé en ce qu'**un boyau en forme de chenille est enfilé sur le tuyau de remplissage centré (5), où les parties de centrage (2a, b) s'écartent du tuyau de remplissage, quand le boyau en forme de chenille a été enfilé d'une distance déterminée sur le tuyau de remplissage, où de préférence la face avant du boyau en forme de chenille pivote un élément de centrage (3a, b) monté de manière rotative sur un support (4a, b) de la partie de centrage (2a, b) respective de manière à l'écarter.

12. Procédé selon la revendication 10 ou 11, **caractérisé en ce qu'**après l'enfilage complet du boyau en forme de chenille (6) sur le tuyau de remplissage (5), le tuyau de remplissage (5) est retourné à sa position de travail.

13. Procédé selon au moins une des revendications précédentes 10 à 12, **caractérisé en ce que** lors du montage du dispositif de centrage de tuyau de remplissage, les parties de centrage (2a, b), de préférence l'ensemble du dispositif de centrage de tuyau de remplissage, sont ajustés de telle manière que l'axe central (M) du dispositif de centrage et donc du tuyau de remplissage (5) soit aligné avec un axe central d'un dispositif d'enfilage de boyau et donc du boyau en forme de chenille.

14. Dispositif de centrage de tuyau de remplissage (1) selon au moins une des revendications précédentes 1 à 9, **caractérisé en ce que** le dispositif de centrage de tuyau de remplissage est déplaçable axialement avec le tuyau de remplissage (5) maintenu.
